# EUROPEAN PATENT SPECIFICATION

(11) **EP 4 323 839 B1**
(45) Date of publication and mention of the grant of the patent: **05.08.2026**
(21) Application number: 22717284.8
(22) Date of filing: 07.04.2022
(51) Int. Cl.: G03B 11/04, G03B 17/56, F16B 3/00, G02B 7/00

(54) **MODULAR HINGING FRAME SYSTEM**
MODULARES SCHARNIERRAHMENSYSTEM
SYSTÈME DE CADRE MODULAIRE AVEC CHARNIÈRES

(30) Priority: 12.04.2021 NL 1043990
(43) Date of publication of application: 21.02.2024
(73) Proprietor: Tellegen, Duco Arnest, 3514 VD Utrecht (NL)
(72) Inventor: Tellegen, Duco Arnest, 3514 VD Utrecht (NL)
(74) Representative: Algemeen Octrooi- en Merkenbureau B.V.
(86) International application number: PCT/NL2022/050194
(87) International publication number: WO 2022/220677

(56) References cited:
- EP-A1- 0 221 063
- EP-B1- 0 221 063
- DE-U1- 202005 004 068
- DE-U1- 202012 012 443
- US-A- 5 347 432

## Description

The invention relates to a modular hinging frame system, the modular hinging frame system comprising a base frame, wherein the base frame is a rectangular frame having a front side and a rear side, the base frame comprising a top profile, a bottom profile, a left profile and a right profile, wherein the base frame can be attached to another base frame by means of a hinge.

US 2005/169628 A1 discloses a frame system with a base frame element having a threaded adapter ring for mounting to the lens of a video or still camera. A lens housing and a cover or sunshade component are hinged to the rim of the frame element. This system has the disadvantage that the base frame can only be mounted to one camera lens having a matching and corresponding threading. Furthermore, additional components like extendable panels or additional sunshades or side covers cannot easily be coupled to the base frame.

US 7 883 222 B2 discloses a rectangular frame for a three-dimensional structure used as a base element of a lens hood. The rectangular frame is arranged adjacent to the front face of a camera lens and can be linked to filter holder modules for colour filters or special-effect filters. The hood wings are fastened to struts and flanges of the frame by means of lateral crosspieces having rotary joints. Clamp elements are required to fix the cross pieces to the flanges. The hood wings are linked to the crosspieces, which act as pivot axis. This system has the disadvantage that several dedicated construction elements must be used narrowing the possible applications of the structure like combining two rectangular frames. Furthermore, the rotary joints and crosspieces are fixed and cannot be adapted to different cameras or other image accessories. Also removing and storing or carrying separate filters, lenses, or other such attachments when not in use, and repeatedly mounting and dismounting accessories, is inconvenient and time consuming.

US 5 347 432 A discloses a hinging frame system comprising a base frame, wherein the base frame is a rectangular frame having a front side and a rear side, the base frame comprising a top, bottom, left and right profiles, wherein the base frame can be attached to another frame by means of a hinge.

The object of the present invention is to provide a modular hinging frame system with which easily hinging assemblies are provided, which assemblies can easily be adapted to the required size and dimensions of an object like a camera, a cup or other device. The system must be able to clamp onto accessories like camera lenses, camera rods. It is a further object of the present invention to provide easy and rapid installation or removal of a desired image accessories. Such image accessories could be a wide angle adapter, sunshades, lens attachments, filters, and the like. The system aims to be suitable for mounting different diameters of the filters, lenses, to different diameter/sizes of the image receiving device or the display screen of the camera, and to greatly reduce the chance on loss/damage to filters/lenses etc. during operation.

These objects are achieved, according to the invention, with a modular hinging frame system comprising a base frame having a profile being provided with a coupling rail, wherein the modular hinging frame system comprises hinge parts, the hinge parts being provided with a hinge portion for forming the hinge by means of an hinge axis, the hinge part comprises a rail engagement portion, arranged for sliding engagement with the coupling rail of the base frame.

As a result, a multi-purpose modular hinging frame system is obtained, comprising a base frame with a coupling rail, suitable for engaging hinge parts, so that by sliding the hinge parts over the coupling rail hinging frame assemblies are constructed that can be sized and adjusted to the desired application and the required dimensions.

Preferably, the coupling rail is a projecting oblong body extending over the front side of a profile of the base frame. The body protruding from the profile of the frame has preferably a rectangular cross-section, but may also be provided with an alternative shape like a curved or arcuate shape or geometric shape.

Preferably, the coupling rail is provided with a stop at an end of the coupling rail.

In particular, the coupling rail is provided with a beveled/sloping portion for introducing the rail engagement portion of the hinge part onto the coupling rail of the base frame. By providing a beveled edge or sloping portion, the hinge part is more easily introduced and slid on the coupling rail. At the end of the rail, the stop prevents the hinge part from sliding from the rail and undesired detachment of the coupled accessory or another base frame.

In a preferred embodiment, two coupling rails are provided on the front side of a profile, each with a beveled portion, so that a hinge part can be introduced upon one of both couplings rails from a position between both coupling rails.

With these measurements, the hinge part can be introduced onto the first one of the coupling rail or onto the second one of the coupling rail starting from a position between both coupling rails. Preferably, the beveled portions of both coupling rails face each other, and the stops of the coupling rails are located near the edge corner of two intersecting profiles of the frame.

The system is also suitable and arranged for easily interchangeably mounting one or more image accessories such as a lens or a lens hood, etc. in front or near the image display member of a monitor (particularly a camera monitor, i.e. a monitor cooperating with a camera),
Preferably, a profile of the base frame is provided with a first coupling rail on the front side and a second coupling rail on the rear side of the profile.

In particular, the thickness (of an edge) of a profile corresponds to the thickness of the coupling rail.

In particular, the cross-section of a profile has the shape of a symmetrical cross.

In a special embodiment, the four profiles of the base frame are each provided with coupling rails on the front side and the rear side.

By providing a first coupling rail to the front side of a profile and a second coupling rail to the rear side of that profile, a symmetrical cross is obtained in cross-section of the profile, when the thickness of the profile of the base frame is identical to the thickness of the coupling rail. This enables introducing the hinge part with its hinge portion in different tangential or rotational positions on a set of two neighbouring protrusions. When all four profiles are provided with a first and second coupling rail on the front and rear side of the base frame, the hinge parts may be introduced on all four profiles and a large amount of different configurations of interconnecting base frames are possible on each profile.

Preferably, the rail engagement portion of the hinge part is a recess which in cross-section corresponds to the cross-section of the profile with couplings rails.

In particular, the rail engagement portion of the hinge part comprises a first rectangular recess and a second rectangular recess extending at a right angle with respect to the first rectangular recess, in such a way that the rail engagement portion corresponds to the cross-sectional shape of a profile having a coupling rail, and that the rail engagement portion has the shape of a half of a cross.

Preferably, the rail engagement portion in cross-section comprises a first engagement arm and a second engagement arm, wherein in the mounted position on a profile the first engagement arm and the second engagement arm enclose a neighbouring set of protrusions comprising a coupling rail and an edge of a profile.

By providing the rail engagement portion of the hinge part with recesses corresponding to the cross-sectional dimensions of the coupling rail (and the congruent edge of the base frame) the hinge part may be positioned in eight different tangential/rotational positions on the profile. By providing the rail engagement portion with a shape of a half of a cross, the hinge part can be introduced in eight different ways upon the profile having a cross-sectional shape of a cross with identical intersecting beams or bars. Advantageously, the rail engagement portion forms two engagement arms, which lock around two neighbouring coupling rails, one of them formed by the edge of the base frame. As a result, the hinge part is locked to the coupling rails of the profile for movement in the radial direction and is only able to move in the axial direction along the profile.

Preferably, the hinge portion of a first one of a hinge part mounted on a first one of a base frame is coupled to the hinge portion of a second one of a hinge part mounted on a second one of a base frame thereby forming the hinge between the base frames by means of an hinge axis and providing a flapping frame or flag.

By providing the hinge portion of the hinge parts with an opening or hole, a hinge axis may be introduced through both hinge portions, creating a hinge, which hinges around the hinge axis.

In an alternative embodiment of the hinge part a connection recess is provided for receiving an edge of an object like an edge of an image accessory. The connection recess facilitates easy mounting e.g. by clamping of the hinge part and the connected base frame to an object having an edge or rim, by receiving the edge within the connection recess. Preferably the object is an image accessory such as a lens, a filter, a lens hood, etc.

The invention also relates to a base frame and to a hinge part for use in the modular hinging frame system according to the invention.

The invention also relates to the use of the modular hinging frame system according to the invention for/with optical devices, the modular hinging frame system comprising a base frame according to the invention and a hinge part according to the invention for easily interchangeably mounting one or more image accessories such as lenses, filters, a lens hood, etc. in front of or near an image receiving member of a camera, or in front or near the image display member of a monitor, in particular a camera monitor.

Summarised, the invention comprises a system of rectangular frames which can be mutually coupled at right angles or other adjustable angles, in which a filter, lens or shielding can be arranged by the user, such that filter(s) and/or lens(es) on the recording side of the camera and/or on the playback side (think for example of a "view finder" application) are easily attached and detached.

The invention will now be discussed in more detail with reference to the figure description below.
- Figure 1: shows in perspective view the modular hinging frame system according to the invention with two interconnected base frames by means of four hinge parts;
- Figures 2A and 2B: shows a base frame in top view and in side view respectively;
- Figure 3: shows in isometric view the base frame with mounted hinge parts in eight different mounting options;
- Figure 4a - 4h: show in cross-sectional view the eight different mounting options of the hinge part from Fig.3;
- Figure 5: shows the modular hinging frame system mounted on the edge of a lens ring.

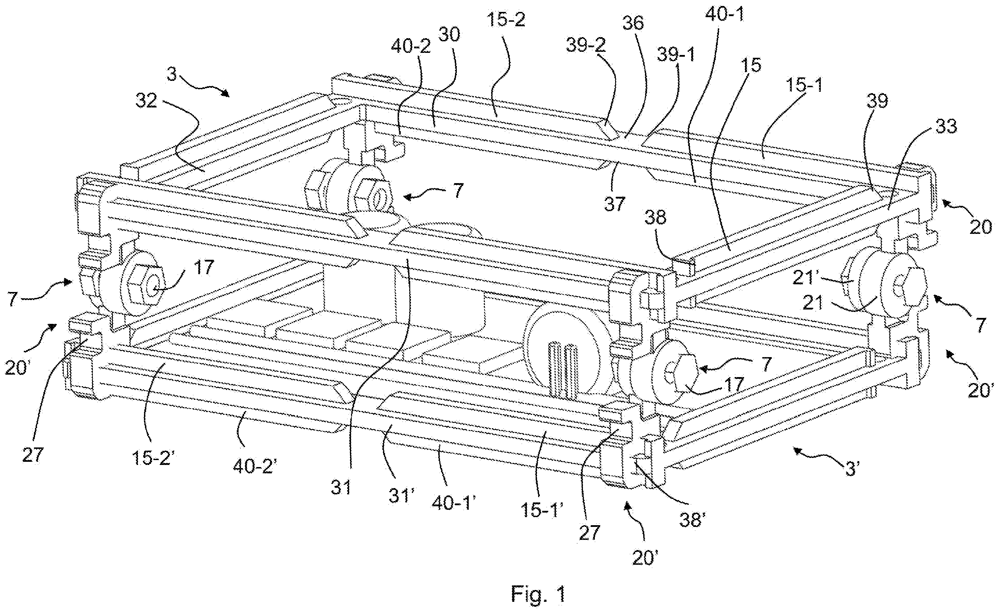

Fig.1 shows an exemplary embodiment of the modular hinging frame system according to the invention comprising an assembly of two base frames, an upper base frame 3 and a lower base frame 3', and eight interconnected hinge parts 20, 20' forming four hinges 7 so that a stiff frame assembly is obtained for including, mounting or protecting a device or object like a circuit board or cup. By interconnecting the two base frames 3, 3' with eight interconnected hinge parts 20, 20' the frames cannot hinge with respect to each other. By removing two hinge axis 17 from the two front sets of interconnected hinge parts 20, the two base frames 3, 3' are able to hinge with respect to each other over the rear hinges 7.

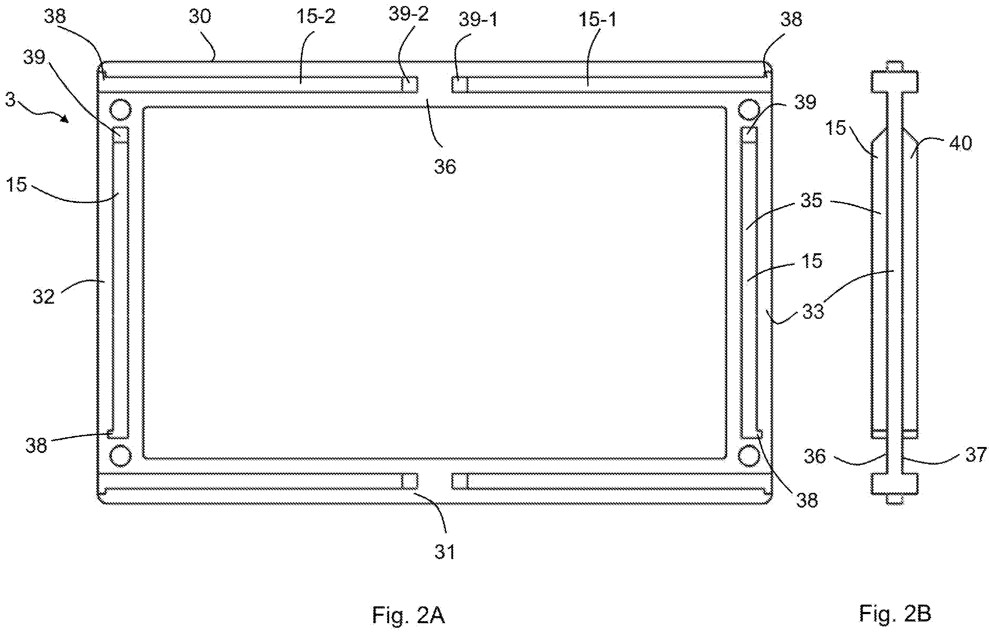

Fig.2A shows in top view the base frame 3 of Fig.1 according to the invention. The base frame is a rectangular frame having a front side 36 and a rear side 37. The base frame comprises a top profile 30, a bottom profile 31, a left profile 32 and a right profile 33. Figure 2B shows in side view the right profile 33 of the base frame 3 of Fig.2A. In the embodiment shown in Figs.2A - 2B the space between the profiles 30, 31, 32, 33 is void, but this space may be provided with an object or accessory, like a closed wall or an image accessory like a filter or a cap. The four profiles 30, 31, 32, 33 of the base frame 3 are provided with a coupling rail 15 on the front side 36 and a coupling rail 40 on the rear side 37 of the frame, as can be seen in Fig.2B. Advantageously, all four profiles 30, 31, 32, 33 are provided with a coupling rail 15 on the front side 36 and on the rear side 40, but in a simple basic embodiment of the invention, only one of the profiles is provided with one coupling rail 15, 40. In the embodiment of Figs.1, 2A - 2B, the coupling rail 15 is formed by an oblong body 35 have a rectangular cross-section protruding from the profile. The shape of the oblong body 35 may alternatively be chosen from a round or polygonal shape like round, (half) circular, oval, a curved or arcuate shape or a geometric shape based on right lines, such as triangular etc. Essential is an oblong body 35 which protrudes from the profile, the body having an identical shape over the length of the profile, so that a hinge part 20' with its rail engagement portion can be introduced and retained upon the coupling rail 15, 40 and be moved over the coupling rail to the desired, require position. In the embodiment of the base frame 3 shown in Fig.2A, the coupling rail 15 on the left profile 32 and the right profile 33 extend substantially from the intersection with the top profile 30 to the intersection with the bottom profile 31. Near the top profile, the coupling rails 15 are provided with a tapered or beveled edges/sloping portions 39, which facilitate the introduction of a hinge part on the coupling rail. Near the bottom profile 31, the coupling rails 15 at their bottom ends are provided with a stop 38 preventing falling off or detaching of the hinge part from the coupling rail. Preferably the beveled portion starts level with the front side 36 of the frame and ends level with the upper side of the coupling rail 15. In Fig.2A the top profile 30 is provided with two coupling rails 15-1, 15-2. In the middle portion of the top profile 30 a section without coupling rail is provided enabling easy introduction of the hinge part onto the coupling rails. The left couplings rail 15-2 is provided with left beveled portion 39-2 and the right coupling rail 15-1 is provided with right beveled portion 39-1 facilitating introduction by sliding movement to the left or the right of the hinge part from the position on the top profile between the both couplings rails 15-1, 15-2. Optionally, more than two coupling rails may be provided on a profile 30, 31, 32, 33. Fig.1 shows coupling rails 40-1, 40-2 on the rear side 37 of the top profile 30 of the upper base frame 3.

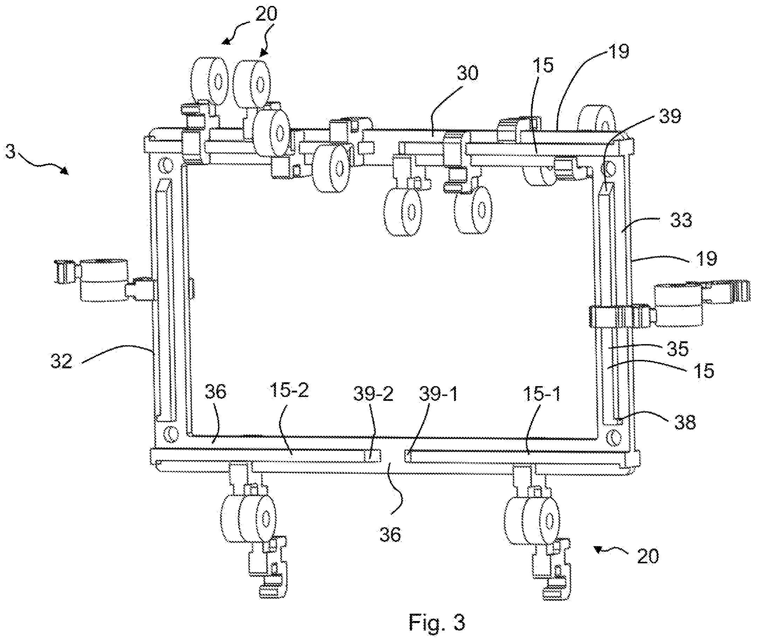

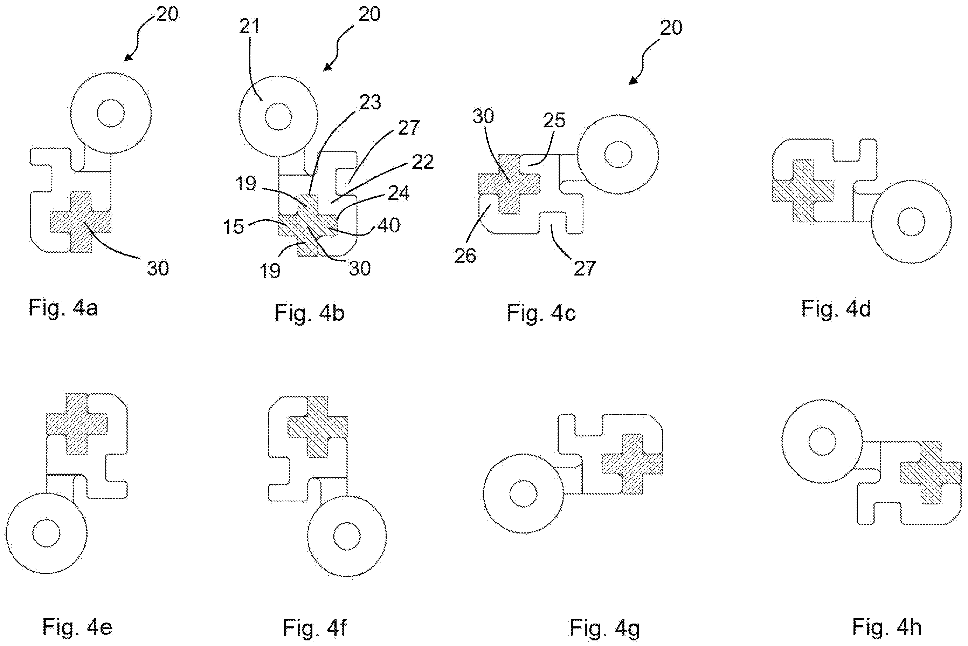

Fig.1 shows how the hinge parts 20, 20' are introduced and retained onto the coupling rails 15, 40. The bottom profile 31' of the lower base frame 3' is provided with coupling rails 15-1', 15-2' on the front side 36 and with coupling rails 40-1', 40-2' on the rear side 37. The hinge parts 21' are moved over the rail to stops 38' at the end of the coupling rails 15-1', 15-2'. The possible positions and orientations of the hinge part on the couplings rails 15, 40 will be further explained in Fig.3 and 4a - 4h. The hinges 7 are formed by introducing hinging axes 17 into holes provided in the abutting hinge portions 21, 21' of the hinge parts 20, 20'. The hinge axis used in the embodiment shown are treaded fasteners like a bolt and nut. Other equivalent known methods and means for constructing a hinge may also be applied.

Fig.3 shows a base frame 3 according to the invention, provided with a large amount of hinge parts 20. On the top profile 30 eight hinge parts 20 are mounted in eight different positions/orientations. This is possible by providing the top profile with a coupling rail 15 on the front side 36 and a coupling rail 40 on the rear side 37, see Fig.1 and Fig.2B. When the thickness of a profile corresponds to the thickness of the coupling rails 15, 40 so that the protruding portions of the coupling rails 15, 40 and the edge 19 of the profile have identical dimensions, a symmetrical cross is obtained in cross-section (see Fig. 4a-4h) allowing different positions/orientations of the hinge parts 20 on the profile.

Figs.4a - 4h show in cross-sectional view the top profile 30 with a hinge part 20 in eight different positions and orientations. The hinge part 20 shown here comprises a hinge portion 21, a rail engagement portion 22 and a connection recess 27. The cross-section of the top profile 30 is a symmetrical cross, because the front coupling rail 15 and the rear coupling rail 40 and the edges 19 of the profile have identical dimensions. The rail engagement portion 22 of the hinge part 20 is provided with a first recess 23 and a second recess 24, the recesses extending at a right angle with respect to each other. The shape and dimensions of the recesses 23, 24 correspond to the shape and dimensions of the coupling rails 15, 40 and the edges 19 of the top profile 30, so that the rail engagement portion 22 may be introduced onto a neighbouring set of rails consisting of a coupling rail 15 and an edge 19 of the profile. The rail engagement portion 22 in cross-section comprises a first engagement arm 25 and a second engagement arm 26, suitable for enclosing the neighbouring set of protrusions comprising a coupling rail 15, 40 and an edge 19 of the profile. Fig.4a, Fig.4d, Fig.4e, Fig.4h show four different rotational positions of the hinge part 20 on the profile 30. Fig.4b, Fig.4c, Fig.4f, Fig.4g show four different rotational positions on the profile 30 of a flipped hinge part 20. As is shown in Figs 4a - 4h, each of the eight different positions of the hinge part 20 on the profile results in a different position of the hinge portion 21, leading to eight different options for positioning the hinge with respect to the base frame 3. Furthermore, the hinge part 20 is optionally provided with a connection recess 27 for engagement of, or support on, or receiving of, an edge of an object like an edge of an image accessory.

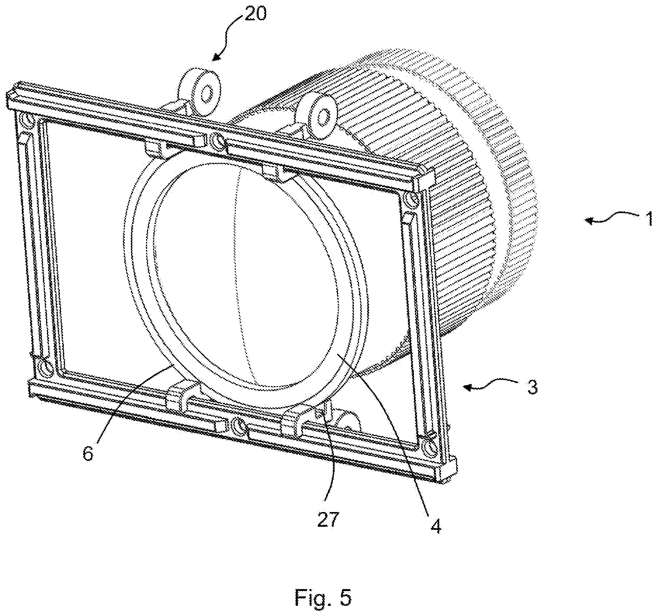

In Fig.5 the use of the modular hinging frame system is shown for easily interchangeably mounting one or more image accessories such as lenses, filters, a lens hood, etc. in front of or near an image receiving member 1 of a camera; in Fig.5 in particular a lens 1 of a camera. The lens 1 is provided with an (adapter) ring 4, having an angular circumferential edge or flange 6. Now the base frame 3 can be mounted onto the adapter ring 4 by receiving the edge 6 of the ring into the connection recesses 27 of the four hinge parts 20 and moving the four hinge parts 20 in the direction of the ring 4 and the lens. Now additional image accessories such as lenses, filters, a lens hood, etc. may be attached to the base frame 3, or be attached to a flapping frame, created with another base frame and one or more sets of hinge parts 20. This flapping frame may be positioned in front of or near an image receiving member of a camera, or in front or near the image display member of a monitor, in particular a camera monitor.

The modular hinging frame system according to the invention aims at being able to provide one or more image accessories such as (one or more) lenses, filters, a lens hood, etc. in a simple interchangeable manner, before or near an image receiving member or an image display member.

The base frame is intended and arranged to extend in use in a plane transverse to the optical axis of the image receiving member or the image display member. Therefore, the base frame is provided with an image aperture or void portion between the profiles for the passage of images through the base frame.

The modular hinging frame system further allows configuring one or more flapping frames by using two or more base frames and two or more hinge parts creating a hinge. The one or more flapping frames are arranged such that each flapping frame can be hingedly and/or detachably coupled to the first base frame. The flapping frames each may comprise an image accessory (i.e. a lens, a filter, part of a lens hood composed of more equal parts) or flapping frames are arranged to be able to easily detach such an image accessory (i.e. as a retainer, suitable for retaining loose accessories). All this is arranged in such a way that during use the one or more flapping frames, each including an image accessory, are coupled to the first base frame and are hinged relative to the image aperture in a position that corresponds to the desired optical configuration.

The modular hinging frame system according to the invention also aims at providing one or more image accessories to an image display member like a (camera) monitor (also referred to as "viewfinder" in an old-fashioned term). The modular hinging frame system is suitable for, and adapted for, the simple and exchangeable application thereon of one or more image accessories such as a lens or a lens hood, etc. in front of or near that image display member.

To this end, a base frame is provided which in use in mounted position extends in a plane transverse to the optical axis of the image display member. The images presented to a user by the image display member passes through the image aperture of the base frame. Subsequently, one or more flapping frames may be provided by using a second one of the base frame and two or more hinge parts creating an hinge. Now, the one or more flapping frames can be hinged and/or easily detachably coupled to the first one of the base frame, wherein the one or more flapping frames comprise, or are arranged to retain, such an image accessory during use. All this is arranged in such a way that during use the one or more flapping frames, each including an image accessory, are coupled to the second one of the base frame and are hinged relative to the image aperture in a position that corresponds to the desired application of the image accessory.

Light/sun screens as image accessories serve to ensure that the user is not hindered by (sun)light from the top and sides when viewing the image of the image display member.

It is noted that preferably the first one of the base frame and the second one of the base frame are substantially equal to each other. Therefore, the first one of the base frame, and the second one of the base frame used as flapping frame are identical in construction and design to the extent that they are interchangeable. However, the base frames may also mutually differ having more or less coupling rail(s) or other provisions or features.

Thus, the invention provides a system for easily interchangeably mounting image accessories such as lenses, filters, a lens hood, etc. in front of the image receiving member and the image display member of a camera, wherein no match is required between the diameter of the filters, lenses, etc. and the diameter/sizes of the receiving aperture resp. the display screen of the camera, greatly reducing the risk of loss/damage to filters/lenses etc. during operation.

## Claims

1. Modular hinging frame system (2), the modular hinging frame system comprising a base frame (3), wherein the base frame is a rectangular frame having a front side (36) and a rear side (37), the base frame comprising a top profile (30), a bottom profile (31), a left profile (32) and a right profile (33), wherein the base frame (3) can be attached to another base frame (3') by means of a hinge (7), **characterised, in that**
a profile (30, 31, 32, 33) of the base frame (3) is provided with a coupling rail (15), wherein the modular hinging frame system (2) comprises hinge parts (20), the hinge parts being provided with a hinge portion (21) for forming the hinge (7) by means of an hinge axis (17), the hinge part (20) comprises a rail engagement portion (22), arranged for sliding engagement with the coupling rail (15) of the base frame (3).

2. Modular hinging frame system (2) according to claim 1, wherein the coupling rail (15) is a projecting oblong body (35) extending over the front side (36) of a profile (30, 31, 32, 33) of the base frame (3).

3. Modular hinging frame system (2) according to claim 1 - 2, wherein the coupling rail (15) is provided with a stop (38) at an end of the coupling rail (15).

4. Modular hinging frame system (2) according to claim 1 - 3, wherein the coupling rail (15) is provided with a beveled/sloping portion (39) for introducing the rail engagement portion (22) of the hinge part (21) onto the coupling rail (15) of the base frame (3).

5. Modular hinging frame system (2) according to claim 1 - 4, wherein two coupling rails (15-1, 15-2) are provided on the front side (36) of a profile (30, 31, 32, 33), each with a beveled portion (39-1, 39-2), so that a hinge part (20) can be introduced upon both couplings rails (15-1, 15-2) from a position between both coupling rails (15-1, 15-2).

6. Modular hinging frame system (2) according to claim 1 - 5, wherein a profile (30, 31, 32, 33) of the base frame (3) is provided with a first coupling rail (15) on the front side (36) and a second coupling rail (40) on the rear side (37) of the profile (30, 31, 32, 33).

7. Modular hinging frame system (2) according to claim 1 - 6, wherein the thickness of a profile (30, 31, 32, 33) corresponds to the thickness of the coupling rail (15, 40); preferably the cross-section of a profile (30, 31, 32, 33) has the shape of a symmetrical cross.

8. Modular hinging frame system (2) according to claim 1 - 7, wherein the four profiles (30, 31, 32, 33) of the base frame (3) are each provided with coupling rails (15, 40) on the front side (36) and the rear side (37).

9. Modular hinging frame system (2) according to claim 1 - 7, wherein the rail engagement portion (22) of the hinge part (20) is a recess which in cross-section corresponds to the cross-section of the profile (30, 31, 32, 33) with couplings rails (15); preferably the rail engagement portion (22) of the hinge part (20) comprises a first rectangular recess (23) and a second rectangular recess (24) extending at a right angle with respect to the first rectangular recess (23), in such a way that the rail engagement portion (22) corresponds to the cross-sectional shape of a profile (30, 31, 32, 33) having a coupling rail (15, 40), and that the rail engagement portion (22) has the shape of a half of a cross.

10. Modular hinging frame system (2) according to claim 9, wherein the rail engagement portion (22) in cross-section comprises a first engagement arm (25) and a second engagement arm (26), wherein in the mounted position on a profile (30, 31, 32, 33) the first engagement arm (25) and the second engagement arm (26) enclose a neighbouring set of protrusions comprising a coupling rail (15, 40) and an edge of a profile (30, 31, 32, 33).

11. Modular hinging frame system (2) according to claim 9 - 10, wherein the hinge portion (21) of a first one of a hinge part (20) mounted on a first one of a base frame (3) is coupled to the hinge portion (21') of a second one of a hinge part (20') mounted on a second one of a base frame (3') thereby forming the hinge (7) between the base frames (3, 3') by means of an hinge axis (17) and providing a flapping frame or flag.

12. Base frame (3) for use in the modular hinging frame system (2) according to claim 1 - 11.

13. Hinge part (20) for use in the modular hinging frame system (2) according to claim 1 - 11.

14. Hinge part (20) according to claim 13, wherein a connection recess (27) is provided for receiving an edge of object like an edge of an image accessory.

15. Use of the modular hinging frame system (2) according to claim 1 - 11, comprising a base frame (3) according to claim 12 and a hinge part (20) according to claim 13 - 14 for easily interchangeably mounting one or more image accessories such as lenses, filters, a lens hood, etc. in front of or near an image receiving member of a camera (1), or in front or near the image display member of a monitor, in particular a camera monitor.

## Patentansprüche

1. Modulares Scharnierrahmensystem (2), wobei das modulare Scharnierrahmensystem einen Grundrahmen (3) umfasst, wobei der Grundrahmen ein rechteckiger Rahmen mit einer Vorderseite (36) und einer Rückseite (37) ist, wobei der Grundrahmen ein oberes Profil (30), ein unteres Profil (31), ein linkes Profil (32) und ein rechtes Profil (33) umfasst, wobei der Grundrahmen (3) mittels eines Scharniers (7) an einem anderen Grundrahmen (3') befestigt werden kann,
**dadurch gekennzeichnet, dass**
ein Profil (30, 31, 32, 33) des Grundrahmens (3) mit einer Kopplungsschiene (15) versehen ist, wobei das modulare Scharnierrahmensystem (2) Scharnierteile (20) umfasst, wobei die Scharnierteile mit einem Scharnierabschnitt (21) zum Ausbilden des Scharniers (7) mittels einer Scharnierachse (17) versehen sind, das Scharnierteil (20) einen Schieneneingriffsabschnitt (22) umfasst, der zum gleitenden Eingriff mit der Kopplungsschiene (15) des Grundrahmens (3) angeordnet ist.

2. Modulares Scharnierrahmensystem (2) nach Anspruch 1, wobei die Kopplungsschiene (15) ein vorstehender länglicher Körper (35) ist, der sich über die Vorderseite (36) eines Profils (30, 31, 32, 33) des Grundrahmens (3) erstreckt.

3. Modulares Scharnierrahmensystem (2) nach Anspruch 1 - 2, wobei die Kopplungsschiene (15) mit einem Anschlag (38) an einem Ende der Kopplungsschiene (15) versehen ist.

4. Modulares Scharnierrahmensystem (2) nach Anspruch 1 - 3, wobei die Kopplungsschiene (15) mit einem abgeschrägten/abfallenden Abschnitt (39) zum Einführen des Schieneneingriffsabschnitts (22) des Scharnierteils (21) auf die Kopplungsschiene (15) des Grundrahmens (3) versehen ist.

5. Modulares Scharnierrahmensystem (2) nach Anspruch 1 - 4, wobei zwei Kopplungsschienen (15-1, 15-2) an der Vorderseite (36) eines Profils (30, 31, 32, 33), jedes mit einem abgeschrägten Abschnitt (39-1, 39-2), bereitgestellt sind, sodass ein Scharnierteil (20) auf beide Kopplungsschienen (15-1, 15-2) aus einer Position zwischen beiden Kopplungsschienen (15-1, 15-2) eingeführt werden kann.

6. Modulares Scharnierrahmensystem (2) nach Anspruch 1 - 5, wobei ein Profil (30, 31, 32, 33) des Grundrahmens (3) mit einer ersten Kopplungsschiene (15) auf der Vorderseite (36) und einer zweiten Kopplungsschiene (40) auf der Rückseite (37) des Profils (30, 31, 32, 33) versehen ist.

7. Modulares Scharnierrahmensystem (2) nach Anspruch 1 - 6, wobei die Dicke eines Profils (30, 31, 32, 33) der Dicke der Kopplungsschiene (15, 40) entspricht; bevorzugt der Querschnitt eines Profils (30, 31, 32, 33) die Form eines symmetrischen Kreuzes aufweist.

8. Modulares Scharnierrahmensystem (2) nach Anspruch 1 - 7, wobei die vier Profile (30, 31, 32, 33) des Grundrahmens (3) jeweils mit Kopplungsschienen (15, 40) auf der Vorderseite (36) und der Rückseite (37) versehen sind.

9. Modulares Scharnierrahmensystem (2) nach Anspruch 1 - 7, wobei der Schieneneingriffsabschnitt (22) des Scharnierteils (20) eine Aussparung ist, die im Querschnitt dem Querschnitt des Profils (30, 31, 32, 33) mit Kopplungsschienen (15) entspricht; bevorzugt der Schieneneingriffsabschnitt (22) des Scharnierteils (20) eine erste rechteckige Aussparung (23) und eine zweite rechteckige Aussparung (24) umfasst, die sich in einem rechten Winkel in Bezug auf die erste rechteckige Aussparung (23) erstreckt, derart, dass der Schieneneingriffsabschnitt (22) der Querschnittsform eines Profils (30, 31, 32, 33) mit einer Kopplungsschiene (15, 40) entspricht, und dass der Schieneneingriffsabschnitt (22) die Form eines halben Kreuzes aufweist.

10. Modulares Scharnierrahmensystem (2) nach Anspruch 9, wobei der Schieneneingriffsabschnitt (22) im Querschnitt einen ersten Eingriffsarm (25) und einen zweiten Eingriffsarm (26) umfasst, wobei der erste Eingriffsarm (25) und der zweite Eingriffsarm (26) in der montierten Position auf einem Profil (30, 31, 32, 33) einen benachbarten Satz von Vorsprüngen umschließen, der eine Kopplungsschiene (15, 40) und eine Kante eines Profils (30, 31, 32, 33) umfasst.

11. Modulares Scharnierrahmensystem (2) nach Anspruch 9-10, wobei der Scharnierabschnitt (21) eines ersten von einem Scharnierteil (20), das an einem ersten von einem Grundrahmen (3) montiert ist, mit dem Scharnierabschnitt (21') eines zweiten von einem Scharnierteil (20'), das an einem zweiten von einem Grundrahmen (3') montiert ist, gekoppelt ist, wodurch das Scharnier (7) zwischen den Grundrahmen (3, 3') mittels einer Scharnierachse (17) ausgebildet wird und ein Klapprahmen oder ein Schirm bereitgestellt wird.

12. Grundrahmen (3) zur Verwendung in dem modularen Scharnierrahmensystem (2) nach Anspruch 1-11.

13. Scharnierteil (20) zur Verwendung in dem modularen Scharnierrahmensystem (2) nach Anspruch 1-11.

14. Scharnierteil (20) nach Anspruch 13, wobei eine Verbindungsaussparung (27) bereitgestellt ist, um einen Rand eines Objekts wie einen Rand eines Bildzubehörs aufzunehmen.

15. Verwendung des modularen Scharnierrahmensystems (2) nach Anspruch 1-11,
umfassend einen Grundrahmen (3) nach Anspruch 12 und ein Scharnierteil (20) nach Anspruch 13-14 zum einfach austauschbaren Montieren eines oder mehrerer Bildzubehörteile, wie etwa Linsen, Filter, eine Linsenblende etc., vor oder in der Nähe eines Bildempfangselements einer Kamera (1) oder vor oder in der Nähe des Bildanzeigeelements eines Monitors, insbesondere eines Kameramonitors.

## Revendications

1. Système de cadre modulaire avec charnières (2), le système de cadre modulaire avec charnières comprenant un cadre de base (3), ledit cadre de base étant un cadre rectangulaire possédant un côté avant (36) et un côté arrière (37), le cadre de base comprenant un profilé supérieur (30), un profilé inférieur (31), un profilé gauche (32) et un profilé droit (33), ledit cadre de base (3) pouvant être fixé à un autre cadre de base (3') au moyen d'une charnière (7), **caractérisé, en ce que**
un profilé (30, 31, 32, 33) du cadre de base (3) est muni d'un rail de couplage (15), ledit système de cadre modulaire avec charnières (2) comprenant des parties charnière (20), les parties charnière étant munies d'une section charnière (21) pour former la charnière (7) au moyen d'un axe de charnière (17), la partie charnière (20) comprend une section de mise en prise de rail (22), agencée pour une mise en prise coulissante avec le rail de couplage (15) du cadre de base (3).

2. Système de cadre modulaire avec charnières (2) selon la revendication 1, ledit rail de couplage (15) étant un corps oblong saillant (35) s'étendant sur le côté avant (36) d'un profilé (30, 31, 32, 33) du cadre de base (3).

3. Système de cadre modulaire avec charnières (2) selon les revendications 1 à 2, ledit rail de couplage (15) étant muni d'une butée (38) au niveau d'une extrémité du rail de couplage (15).

4. Système de cadre modulaire avec charnières (2) selon les revendications 1 à 3, ledit rail de couplage (15) étant muni d'une section biseautée/inclinée (39) en vue de l'introduction de la section de mise en prise de rail (22) de la section charnière (21) sur le rail de couplage (15) du cadre de base (3).

5. Système de cadre modulaire avec charnières (2) selon les revendications 1 à 4, deux rails de couplage (15-1, 15-2) étant prévus sur le côté avant (36) d'un profilé (30, 31, 32, 33), chacun avec une section biseautée (39-1, 39-2), afin qu'une partie charnière (20) puisse être introduite sur les deux rails de couplage (15-1, 15-2) à partir d'une position entre les deux rails de couplage (15-1, 15-2).

6. Système de cadre modulaire avec charnières (2) selon les revendications 1 à 5, un profilé (30, 31, 32, 33) du cadre de base (3) étant muni d'un premier rail de couplage (15) sur le côté avant (36) et d'un second rail de couplage (40) sur le côté arrière (37) du profilé (30, 31, 32, 33).

7. Système de cadre modulaire avec charnières (2) selon les revendications 1 à 6, ladite épaisseur d'un profilé (30, 31, 32, 33) correspondant à l'épaisseur du rail de couplage (15, 40) ; de préférence ladite section transversale d'un profilé (30, 31, 32, 33) possédant la forme d'une croix symétrique.

8. Système de cadre modulaire avec charnières (2) selon les revendications 1 à 7, lesdits quatre profilés (30, 31, 32, 33) du cadre de base (3) étant chacun munis de rails de couplage (15, 40) sur le côté avant (36) et le côté arrière (37).

9. Système de cadre modulaire avec charnières (2) selon les revendications 1 à 7, ladite section de mise en prise de rail (22) de la partie charnière (20) étant un évidement qui, en coupe transversale, correspond à la section transversale du profilé (30, 31, 32, 33) avec des rails de couplage (15) ; de préférence, la section de mise en prise de rail (22) de la partie charnière (20) comprenant un premier évidement rectangulaire (23) et un second évidement rectangulaire (24) s'étendant à angle droit par rapport au premier évidement rectangulaire (23), d'une façon telle que la section de mise en prise de rail (22) corresponde à la forme en coupe transversale d'un profilé (30, 31, 32, 33) possédant un rail de couplage (15, 40), et que la section de mise en prise de rail (22) ait la forme d'une demi-croix.

10. Système de cadre modulaire avec charnières (2) selon la revendication 9, ladite section de mise en prise de rail (22) en coupe transversale comprenant un premier bras de mise en prise (25) et un second bras de mise en prise (26), ledit premier bras de mise en prise (25) et ledit second bras de mise en prise (26) renfermant, dans la position montée sur un profilé (30, 31, 32, 33), un ensemble voisin de saillies comprenant un rail de couplage (15, 40) et un bord d'un profilé (30, 31, 32, 33).

11. Système de cadre modulaire avec charnières (2) selon les revendications 9 à 10, ladite section charnière (21) d'une première d'une partie charnière (20) montée sur un premier d'un cadre de base (3) étant couplée à la section charnière (21') d'une seconde d'une partie charnière (20') montée sur un second d'un cadre de base (3'), formant ainsi la charnière (7) entre les cadres de base (3, 3') au moyen d'un axe de charnière (17) et fournissant un cadre ou drapeau battant.

12. Cadre de base (3) destiné à être utilisé dans le système de cadre modulaire avec charnières (2) selon les revendications 1 à 11.

13. Partie charnière (20) destinée à être utilisée dans le système de cadre modulaire avec charnières (2) selon les revendications 1 à 11.

14. Partie charnière (20) selon la revendication 13, un évidement de raccordement (27) étant prévu pour recevoir un bord d'objet comme un bord d'un accessoire d'image.

15. Utilisation du système de cadre modulaire avec charnières (2) selon les revendications 1 à 11, comprenant un cadre de base (3) selon la revendication 12 et une partie charnière (20) selon les revendications 13 à 14 pour monter facilement de manière interchangeable un ou plusieurs accessoires d'image tels que des lentilles, des filtres, un pare-soleil, etc. devant ou à proximité d'un élément de réception d'image d'une caméra (1), ou devant ou à proximité de l'élément d'affichage d'image d'un moniteur, en particulier un moniteur de caméra.
